(19) Europäisches Patentamt
European Patent Office
Office européen des brevets

(11) **EP 2 317 189 B1**

(12) **EUROPEAN PATENT SPECIFICATION**

(45) Date of publication and mention
of the grant of the patent:
**24.12.2014 Bulletin 2014/52**

(51) Int Cl.:
**F16K 17/30** (2006.01)   **F16K 47/04** (2006.01)
**F16K 27/02** (2006.01)   **F16K 31/126** (2006.01)
**G05D 7/01** (2006.01)

(21) Application number: **09802661.0**

(22) Date of filing: **22.07.2009**

(86) International application number:
**PCT/JP2009/003450**

(87) International publication number:
**WO 2010/013412 (04.02.2010 Gazette 2010/05)**

(54) **CONSTANT FLOW RATE CONTROL DEVICE**

KONSTANTER DURCHFLUSSREGLER

DISPOSITIF DE COMMANDE DE DÉBIT CONSTANT

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **26.07.2008 JP 2008192919**

(43) Date of publication of application:
**04.05.2011 Bulletin 2011/18**

(73) Proprietor: **Fuji Bellows Co., Ltd
Kanagawa 242-0012 (JP)**

(72) Inventors:
• **KOJIMA, Hiroki
Yamato-shi
Kanagawa 242-0012 (JP)**
• **NAKAMURA, Takanobu
Yamato-shi
Kanagawa 242-0012 (JP)**
• **OGURI, Takeo
Yamato-shi
Kanagawa 242-0012 (JP)**
• **SUZUKI, Takatomo
Yamato-shi
Kanagawa 242-0012 (JP)**

(74) Representative: **Klingseisen, Franz
Klingseisen & Partner
Postfach 10 15 61
80089 München (DE)**

(56) References cited:
**EP-A1- 0 576 816     JP-A- 7 063 277
JP-A- 50 103 722     JP-A- 63 009 797
JP-A- 2001 330 195   US-A- 3 006 378
US-A- 4 210 172      US-A- 4 241 757**

EP 2 317 189 B1

**Description**

The present invention relates to a constant flow rate control device, according to the preamble of claim 1, and, more particularly, to a constant flow rate control device which can control the flow rate of fluid, even a very small flow rate, to a predetermined flow rate with high precision, while controlling the influence caused by a change in the temperature of the fluid.


Background Art

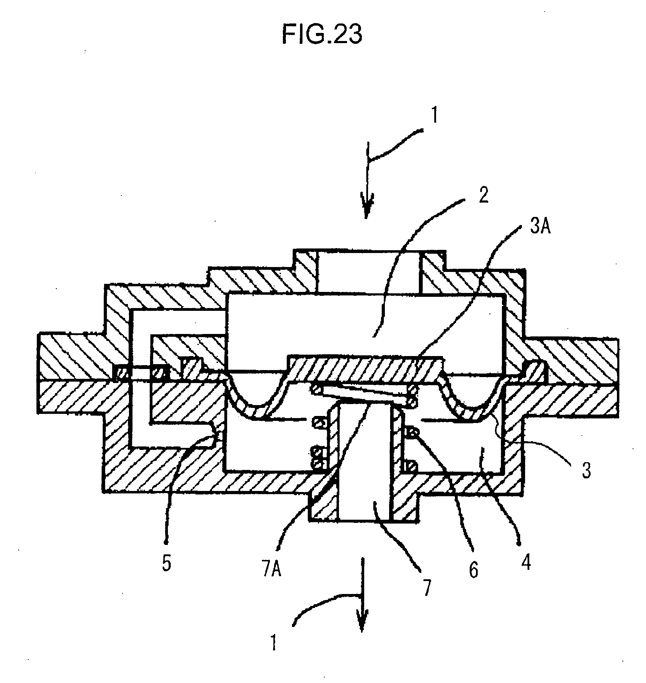

US 4 210 172 A discloses such a fluid dispensing system for dispensing fluid from a container under pressure comprising a housing with a diaphragm therein biased by a spring wherein apertures are provided on a metal disc connected with the diaphragm.
EP 0 576 816 AI discloses a similar device.
US 3 006 378 A discloses a resilient uniform rate of flow control device wherein a plurality of annularly spaced flow control orifices are provided in a disc inserted in a casing wherein the flow control orifices have communication with radial passageways on the downstream face which are in communication with an outlet passageway.
Conventionally, in the case where the flow rate of fluid is controlled, decompressing means such as a governor is disposed upstream of an orifice as a restricting section (or restricting element) to adjust the fluid pressure at the entrance of the orifice to substantially a constant level to thereby control the flow rate of the fluid that passes through the orifice to a constant rate.
However, the flow control device which uses such decompressing means like a governor has a problem that the cost increases remarkably and the device is enlarged.
In this respect, conventionally, various flow control devices have been proposed; for example, Patent Literature 1 (Japanese Patent Application Laid-open No. Hei 5-99354) describes a constant flow rate valve to be described below.
Namely, the constant flow rate valve described in the Patent Literature 1 is intervened in a fluid passage 1, and is configured to include a first chamber 2 into which a fluid flows from the upstream of the fluid passage 1, a second chamber 4 which is connected to the downstream of the fluid passage 1, a diaphragm 3 which defines the first chamber 2 and the second chamber 4, and an orifice 5 which bypasses the diaphragm 3 and connects the first chamber 2 and the second chamber 4 as shown in Fig. 23.
Further, the constant flow rate valve is configured in such a way that a valve 3A is integrally attached to the diaphragm 3 so that the area of the fluid passage can be controlled by a change in the relative positions of the valve 3A and a valve seat 7A which is provided in association with the valve 3A at the inlet portion of an exit passage 7 which connects the second chamber 4 and the fluid passage 1 at the downstream thereof, and a coil spring 6 is disposed as an elastic member which urges the diaphragm 3 or the valve 3A in a predetermined way against the pressure differential between the first chamber 2 and the second chamber 4.
In the constant flow rate valve with such a configuration, the fluid which has flowed into the first chamber 2 from the fluid passage 1 on the upstream side is decompressed by the orifice 5, flows into the second chamber 4, passes through the clearance between the valve seat 7A and the valve 3A, which demonstrates a predetermined diaphragm effect so that the pressure differential between the first chamber and the second chamber becomes constant flow, and flows out to the outlet passage 7 and, eventually, to the fluid passage 1 on the downstream side.
This constant flow rate valve operates as follows to control the flow rate of the fluid which passes through the constant flow rate valve concerned to a predetermined flow rate.
Namely, when the pressure of the fluid flowing into the first chamber 2, for example, rises from the state where the input flow rate of the fluid from the fluid passage 1 on the upstream side to the first chamber 2, and the flow rate of the fluid which passes through between the valve seat 7A and the valves 3A are equal to each other, so that the pressure difference between the pressure of the fluid flowing into the first chamber 2 and the pressure of the fluid in the second chamber 4 becomes larger than the set pressure, the diaphragm 3 and the valve 3A are moved in a valve closing direction (downward in Fig. 23) against the elastic force of the coil spring 6. As a result, the clearance between the valve seat 7A and the valve 3A becomes smaller, keeping constant the pressure difference between the pressure of the fluid which flows into the first chamber 2 and the pressure of the fluid in the second chamber 4, thus suppressing the passing flow rate of the fluid which passes through the clearance from increasing due to the rise of the pressure of the fluid, and keeping the flow rate of the fluid flowing out.
When the pressure of the fluid that flows into the first chamber 2 drops, on the other hand, the diaphragm 3 and the valve 3A move in a valve opening direction (upward in Fig. 23). As a result, the clearance between the valve seat 7A and the valve 3A becomes larger, keeping constant the pressure difference between the pressure of the fluid in the second chamber 4 and the pressure of the fluid which flows into the first chamber 2. This suppresses the passing flow rate of the fluid which passes through the clearance from increasing due to the fall of the pressure of the fluid, thereby keeping the flow-out rate.

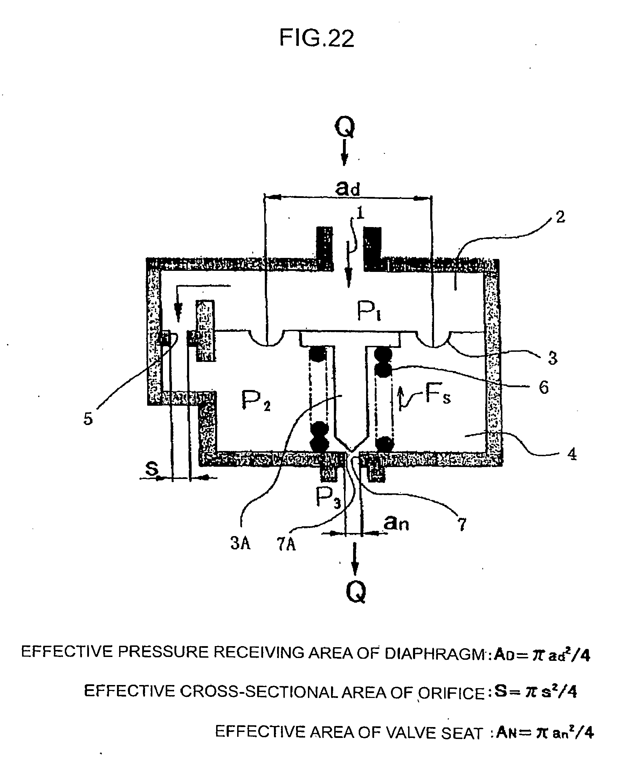

Now, referring to an exemplary diagram shown in Fig. 22, the relation between the flow rate in the above-described conventional constant flow rate valve, and the orifice diameter (pass area of the orifice) which is the restricting section (or restricting element) will be described.

As shown in Fig. 22, given that the fluid pressure of the first chamber 2 is $P_1$, the fluid pressure of the second chamber 4 is $P_2$, the effective area of the diaphragm 3 is $P_3$, the spring load of the coil spring is $F_S$, the pass area of the orifice 5 is S, and the pass area of the outlet passage 7 (valve seat 7A) is AN, it is generally known that the following equations of relations are fulfilled.

$$P_1 \cdot A_D = P_2 \cdot (A_D - A_N) + P_3 \cdot A_N + F_S$$

$$(P_1 - P_2) \cdot A_D = F_S - (P_2 - P_3) \cdot A_N$$

$$\text{If } P_1 - P_2 = \Delta P,$$

$$\Delta P = P_1 - P_2 = (F_S - (P_2 - P_3) \cdot A_N)/A_D$$

$$= F_S/A_D - A_N/A_D \cdot (P_2 - P_3)$$

When AN is sufficiently smaller than $A_D$, the term $A_N/A_D$ can be disregard. Further, in the case of minute displacement, it can be said that $F_S/A_D$ = const. Thus,

$$\Delta P \approx F_S/A_D = const.$$

Therefore,

$$\text{flow rate } Q = kS\,(\Delta P)^{1/2} = const$$

k: constant of proportionality

$$\text{flow rate } Q \propto S\,(\Delta P)^{1/2} \propto S$$

are obtained.

That is, the flow rate Q is a constant flow rate (const), and is in proportional to the pass area S of the orifice 5. Therefore, in case of controlling a very small flow rate to a constant rate, it is understood that the pass area S of the orifice 5 becomes minute.

Therefore, when a very small flow rate is controlled using the conventional constant flow rate valve described in the Patent Literature 1, the pass area of the orifice 5 will become very small (large decompression effect) in which case even if a strainer or the like is disposed upstream, a slime, a foreign matter, dust, or the like which passes through the strainer or the like is likely to cause clogging, which needs, for example, periodical maintenance and is inferior in reliability.

Such a small-diameter orifice is difficult to process, and causes the flow rate to be sensitively responsive to the processing precision, which results in poor yield and poor productivity.

In this respect, the present applicant has proposed, in Japanese Patent Application No. 2007-069377, a constant flow rate control device which can realize minute flow rate control while maintaining the diameter at a predetermined size, and has a restricting section configured to include pipe-like restricting elements and a multistage orifice.

The constant flow rate control device proposed in Japanese Patent Application No. 2007-069377 is configured so as to realize a high decompression effect while keeping a restricting section to a predetermined diameter size to suppress occurrence of clogging or the like, and is grounded on the "Hagen Poiseuille's law".

That is, based on the relation of

$$\text{instantaneous flow rate } Q = (\pi r^4/8\eta) \times (\Delta P/L) = (\pi r^4 \times \Delta P)/(8\eta \times L)$$

r: the inside radius of the pipe, $\eta$: the viscosity of fluid, $\Delta P$: pressure loss, and L: the length in the flow direction, provided that $\eta$ and $\Delta P$ will not change in obtaining the same flow rate Q, r (inside radius of the pipe) can be increased by increasing L (the length in the flow direction). As a result, it is possible to secure productivity as well as achieve constant flow control in a very small field with high precision without causing clogging or the like.

That is, the device aims at making the inside diameter of the pipe larger while realizing high pressure loss using the pressure loss by the shearing force between the fluid and the inner wall of the pipe where the fluid flows, or the shearing force inside a fluid, these shearing force has the characteristic that it greatly depends on the viscosity of a fluid.

That is, $\eta$ (viscosity of a fluid) changes depending on temperature, and if $\eta$ (viscosity of a fluid) changes depending on the temperature, the instantaneous flow rate Q will change in response to the influence of the temperature from the above equation. In case of the constant flow rate control device using a pipe-like restricting section, under the service condition that the fluid temperature changes, the flow rate changes according to the temperature change of the fluid and the control range of the constant flow control changes, or a temperature compensating mechanism is needed, which suggest cost increase.

Although Japanese Patent Application No. 2007-069377 has a description on the constant flow rate control device which has a restricting section configured to include a multistage orifice, this configuration has a lot of parts depending on the mode of usage, has a high cost, is comparatively difficult to miniaturize, and is inferior in productivity, so that there may be a case where the adoption of the device is difficult.

The present invention has been accomplished in view of such circumstance, and it is an object of the present invention to provide a constant flow rate control device which is comparatively inexpensive, simple, compact in size, easily processed and excellent in assembling, suppresses occurrence of clogging or the like even if the device controls a minute flow rate, providing a maintenance-free condition, and can highly accurately perform predetermined flow rate control by suppressing a temperature-originated variation in a controlled flow rate, making it possible to simultaneously achieve high productivity, high reliability, and highly accurate constant flow rate control

To achieve the object, the present invention comprises the features in the characterizing part of claim 1.

A constant flow rate control device according to the invention is intervened in a fluid passage to control a flow rate of fluid flowing in the fluid passage to a predetermined flow rate, and is configured to include a first chamber into which the fluid flows from an upstream fluid passage, a second chamber connected to a downstream fluid passage, a diaphragm that defines the first chamber and the second chamber, a restricting section having a plurality of restriction holes which provides a pressure difference between the first chamber and the second chamber, a movable valve integrally attached to the diaphragm, a valve seat provided for the movable valve and facing a passage connecting the second chamber and the downstream fluid passage, and an elastic member that urges the movable valve with a predetermined elastic force, wherein the restricting section includes a restricting element and is structured integral with the movable valve, the restricting element has all or some of the plurality of restriction holes arranged in parallel on a same plane, and restricting element forming parts having holes and/or grooves are stacked tightly in such a way that the restriction holes are communicated (connected) with each other by pressure chamber forming passages having fluid pass areas larger than the restriction holes at a top and a back of the plane, and fluid flowed from an inlet hole passes through the restriction holes in one route in order and flows out from an outlet hole without being leaked.

According to the invention of claim 2, the inlet hole and the outlet hole are provided facing each other at both extremities of the tightly stacked restricting element forming parts.

This means permits the plurality of restriction holes to provide the necessary pressure difference (pressure loss) between the first chamber and the second chamber while securing a predetermined pass area to prevent occurrence of clogging with dust or the like, permits the restricting section to be formed compact, and permits the restricting section to be provided at the movable valve integrally, making the configuration simpler, so that a low-cost and compact constant flow rate control device is provided.

According to the invention described in claim 1, the restriction holes are characterized to be formed in such a way that a length of the restriction holes in a fluid flowing direction is 1.5d or less with respect to a diameter d of a circle having a same area as a pass area of the restriction holes.

This means provides a constant flow rate control device that suppresses a change in control flow rate which is caused by the temperature of the fluid and can control the flow rate with a very high precision.

According to the invention of any one of claims 1 to 3, the restricting element forming parts of the restricting element are characterized to be formed by etched articles.

This means permits the restriction holes to be processed minutely homogeneously, so that a lot of restricting sections can be produced without using a mold, thus providing a low-cost constant flow rate control device.

According to the invention of any one of claims 1 to 4, the restricting element forming parts of the restricting element are characterized to be integrated by adhesion.

This means improves the assembling of the restricting section as well as enables quality control on the restricting section alone for the restriction performance such as the Cv value and Kv value, thereby providing a low-cost and compact constant flow rate control device whose rationalized manufacture is possible.

The invention of claim 6 is a constant flow rate control device which is intervened in a fluid passage to control a flow rate of fluid flowing in the fluid passage to a predetermined flow rate, the constant flow rate control device configured to include a first chamber into which the fluid flows from an upstream fluid passage, a second chamber connected to a downstream fluid passage, a diaphragm that defines the first chamber and the second chamber, a restricting section having a plurality of restriction holes which provides a pressure difference between the first chamber and the second chamber, a movable valve integrally attached to the diaphragm, a valve seat provided for the movable valve and facing a passage connecting the second chamber and the downstream fluid passage, and an elastic member that urges the movable valve with a predetermined elastic force, wherein the restricting section includes a restricting element and is structured integral with the movable valve, the restricting element has all or some of the plurality of restriction holes arranged in parallel on a same plane, restricting element forming parts having holes and/or grooves are stacked tightly in such a way that the restriction holes are communicated (connected) with each other by pressure chamber forming passages having fluid pass areas larger than the restriction holes at a top and a back of the plane, and fluid passes through the restriction holes in order without being leaked, and the restricting element forming parts of the restricting element are integrated by molding.

This means improves the degree of freedom of design on snap-fit, rotational snap-fit, or fitting threads, and also enables inexpensive integration of the restricting section, thereby providing a low-cost and compact constant flow rate control device.

According to the invention of claim 6, the restricting element forming parts of the restricting element are characterized to be integrated by molding from both of an outer peripheral side and an inner peripheral side of the restricting element forming parts.

This means improves the degree of freedom of design on snap-fit, rotational snap-fit, or fitting threads, and also enables inexpensive and high-adhesion integration of the parts constituting the restricting section even in a case where it is necessary to sufficiently secure the fluid sealing between the constituting parts of the restricting section for the purpose of high-precision flow rate control, thereby providing a high-precision and low-cost constant flow rate control device.

According to the invention of any one of claims 1 to 7, the restricting element is characterized to have a protruding shape at an outer peripheral portion thereof, and the movable valve is characterized to have an insertion groove provided in such a way that the protruding shape of the restricting element is insertable therein, and a holding wall which prevents the protruding shape from coming off in an axial direction when the restricting element is turned after insertion of the protruding shape of the restricting element in the insertion groove.

This means permits the projections to be processed at the time of processing the restriction holes by etching or the like or at the time of molding, and permits the projections to serve as fixing means and securely attached to the movable valve per se, thereby providing a low-cost constant flow rate control device with a simpler configuration.

Effect of the Invention

As described above, the invention can provide a constant flow rate control device which is not only comparatively inexpensive, simple, compact in size, but also is easily processed and excellent in assembling and rationalization of quality control, suppresses occurrence of clogging or the like even in case of controlling the flow rate to a minute flow rate (e.g., a minute flow rate of the order of 0.1 kg/min or a very minute flow rate of the order of 0.001 kg/min), providing a maintenance-free condition, and can perform predetermined flow rate control with extremely high precision by suppressing a variation in a controlled flow rate caused by the temperature of the fluid, making it possible to simultaneously achieve high productivity, high reliability, and highly accurate constant flow rate control for the first time.

Best Mode of Carrying Out the Invention

A constant flow rate control device according to an embodiment of the present invention will be described in detail based on the accompanying drawings. This invention is not limited by embodiments to be described below.

The fluid which is subject to control of the flow rate of the constant flow rate control device according to the following embodiments is applicable to both incompressible fluid and compressive fluid. It is also applicable to gases as well as liquids, such as tap water and pure water.

First Embodiment

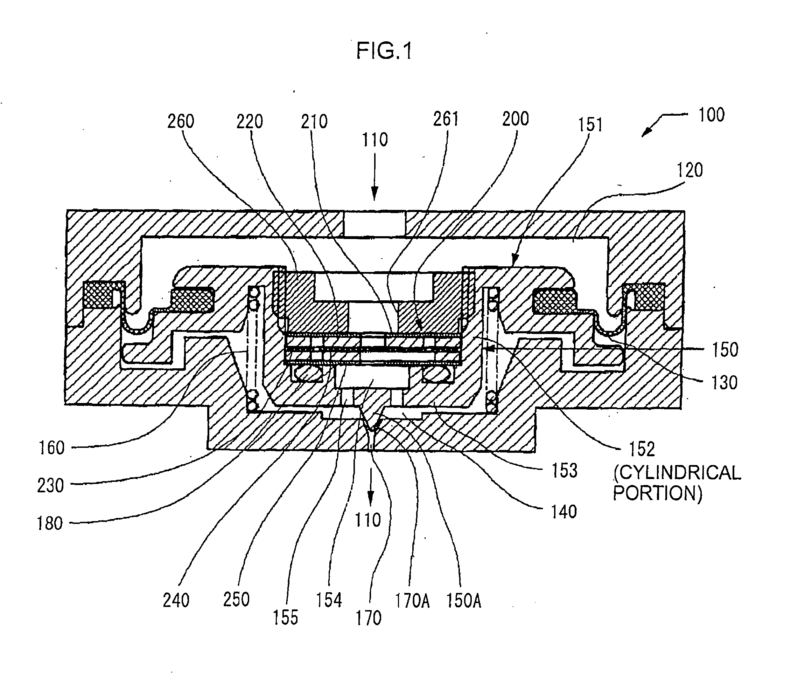

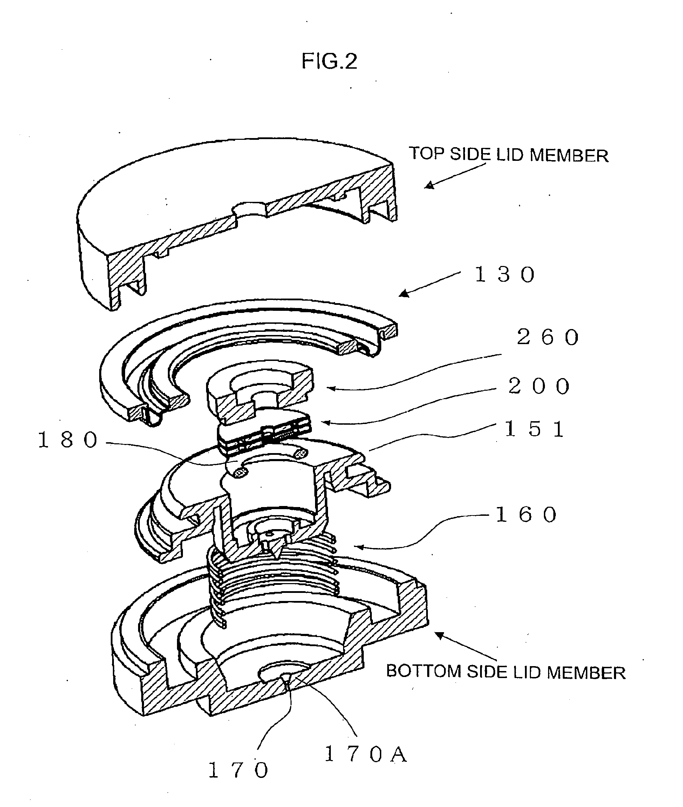

As shown in Figs. 1 and 2, a constant flow rate control device (constant flow rate valve) according to a first embodiment of the invention is configured to include a first chamber 120 which is intervened in a fluid passage 110 and into which a fluid flows into from the upstream side of the fluid passage 110, a second chamber 140 which is connected to the downstream side of the fluid passage 110, a diaphragm 130 which defines the first chamber 120 and the second chamber 140, and a movable valve 151 which includes a restricting section 150 which connects the first chamber 120 and the second chamber 140 and is provided integrally at the diaphragm 130.

The movable valve 151 has a needle valve 150A on the second chamber 140 side.

A valve seat 170A associated with the needle valve 150A is formed at the inlet portion of an outlet passage 170 which connects the second chamber 140 and the fluid passage 110 downstream thereof, so that the area of the flow passage can be controlled to a predetermined value by a change in the relative position of the needle valve 150A with respect to the valve seat 170A.

A coil spring 160 is disposed as an elastic member for urging the diaphragm 130 and eventually the movable valve 151 to a predetermined amount against a pressure difference $\Delta P$ between the first chamber 120 and the second chamber 140 (against the displacement of the diaphragm 130 and eventually the displacement of the needle valve 150A).

Now, the restricting section 150 according to this embodiment will be described in detail.

As mentioned above, in case of controlling a minute flow rate using the constant flow rate valve as described in the Patent Literature 1, the pass area of the orifice or the restricting section becomes very small, so that clogging or the like is likely to occur due to a scale, slime, foreign matter, dust, etc., which may require regular maintenance. In addition, such a small-diameter orifice is difficult to process and causes the flow rate to be sensitively responsive to the processing precision, resulting in poor yield and poor productivity.

Further, in the case of the constant flow rate control device using the restricting section having a shape of a long pipe as described in the Japanese Patent Application No. 2007-069377 filed by the present applicant, the distance in the restricting section over which shearing force is generated between the fluid and the inner wall along which the fluid flows is long (pipe frictional force coefficient is large), so that a change in the controlled instantaneous flow rate caused by a change in the temperature of the fluid is large. Depending on the use condition or the like where the fluid temperature easily changes, therefore, there may be a case where a temperature compensating mechanism needs to be provided in order to control the instantaneous flow rate with high precision.

In this respect, the present inventors have repeatedly made various examinations, studies and experiments to provide a constant flow rate control device which can reduce a change in the instantaneous flow rate originated from a liquid temperature without causing clogging or the like, thereby achieving highly accurate constant flow rate control, and can keep the productivity at a high level at the same time, and have found out the following.

Namely, the present inventors discovered the structure that allows even a constant flow rate control device of the type which has the first chamber 120, the diaphragm 130, the second chamber 140 and the restricting section 150 connecting the first chamber 120 and the second chamber 140 to achieve highly accurate constant flow rate control without causing clogging or the like and with an improvement on a change in flow rate originated from a change in the temperature of the fluid, and to secure the productivity at the same time.

Specifically, this invention uses the pressure loss caused by the contraction phenomenon that is generated at the restricting section.

The pressure of a fluid decreases (pressure loss) as the fluid flows against the frictional force generated by the shearing force in the fluid, the frictional force (pipe friction) generated by the shearing force of the wall of a tube and the fluid, or the like. The frictional force greatly depends on the viscosity of the fluid, and the viscosity greatly depends on the temperature.

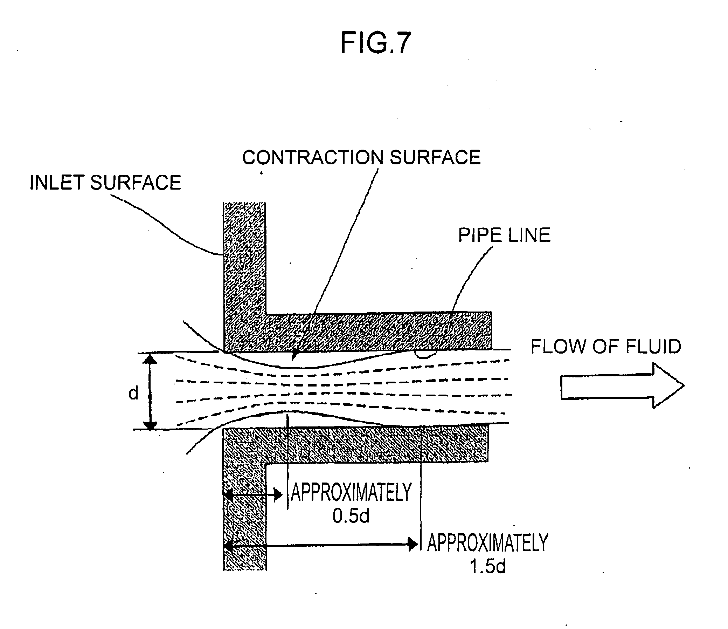

As shown in Fig. 7, since the fluid from every direction may flow into the restricting section when passing through the restricting section, the flow of the fluid advances through the restricting section while changing the direction of the flow line, and the flow of the fluid has a contacted portion at a point which is about 0.5d traveled from the entrance side of the restricting section in the flow direction of the fluid with respect to the hole diameter (diameter), then the cross section of the flow direction of the fluid is enlarged to the hole diameter d at a point traveled by about 1.5d in the flow direction of the fluid from the inlet surface of the restricting section, and the fluid flows along the inner wall of the restricting section A thereafter.

From these things, it is found that to reduce the influence of a temperature originated change in shearing force, such as pipe friction, at the restricting section, on the flow rate of the fluid, it is effective to shorten the length which contacts the tube wall at the restricting section, and it is effective to set the length to 1.5d or less from the inlet surface of the restricting section in the flow direction of the fluid with respect to the bore diameter d of the restricting section.

By the way, the present applicant has proposed, in Japanese Patent Application No. 2007-069377, a constant flow rate control device which has a multistage orifice utilizing the fact that by allowing a fluid to pass through a restriction hole of a predetermined size while intentionally changing the direction of the flow line of the fluid multiple times, the pressure loss effect which is equivalent to the one obtained when a fluid is allowed to pass through a smaller restriction hole. However, the restricting section of the constant flow rate control device is structured with an insufficient consideration given on the influence of a temperature originated change in shearing force, such as pipe friction, at the restricting section, on the flow rate of a fluid, and to have a plurality of partitions with minute openings aligned at predetermined intervals in the flow direction of a fluid, which involves a lot of parts. Therefore, there is some room for improving the productivity, the cost, etc.

Then, the present inventors have paid attention on the fact that if the configuration such that a plurality of restriction holes with a length L in the flow direction of a fluid set to 1.5d or less from the inlet surface of the restricting section with respect to the hole diameter d of the restricting section are disposed on a single part is employed, it is possible to achieve highly accurate constant flow rate control by suppressing a change in instantaneous flow rate originated from a change in temperature while suppressing occurrence of clogging or the like by keeping the size of the restriction hole to a comparatively large size (hole diameter), and, at the same time, achieve cost reduction originated from reduction in the number of parts, weight reduction, compactness, and improved productivity for the first time.

In consideration of the foregoing situation, the restricting section 150 according to the embodiment adopts a structure such that the length L of the restricting section in the flow direction of the fluid is 1.5d or less to the diameter d of each restriction hole.

The restricting section 150 according to the embodiment, as shown in Figs. 1 and 2, is structured to include the movable valve 151 which is attached to the central part of the diaphragm 130 to define the first chamber 120 and the second chamber 140, and moves so as to change the clearance between the needle valve 150A and the valve seat 170A.

The movable valve 151 includes an approximately cylindrical portion 152 which is open facing the first chamber 120, a lower end wall 153 provided on a lower end side in Fig. 1, and a communication passage 155 bored at a part of the lower end wall 153 to communicate with an internal space 154 of the cylindrical portion 152, and eventually with the first chamber 120 and the second chamber of 140. The needle valve 150A mentioned already is provided to protrude from the lower end wall 153 by a predetermined amount in such a way as to extend downward in Fig. 1.

As shown in Figs. 1 and 2, the restricting element 200 is inserted in the internal cylindrical portion of the cylindrical portion 152, and is securely attached to the cylindrical portion 152 via a fixing member 260 where a passage 261 for the fluid 110 is bored. Specifically, threads are formed in the inner periphery of the internal cylindrical portion of the cylindrical portion 152, and threads associated with the threads are formed in the outer periphery of the fixing member 260, so that with the fixing member 260 fastened into the cylindrical portion 152, the restricting element 200 can be pressed, with predetermined force, against the sealant 180 (for example, O-ring), which is intervened between the lower end wall 153 and the restricting element 200, to be securely attached.

The sealant 180 can be made of a rubber having a predetermined elastic force, silicon or another resin, or a metal such as copper which is comparatively soft. It is also possible to adopt a liquid sealing compound, such as liquefied packing, as the sealant 180.

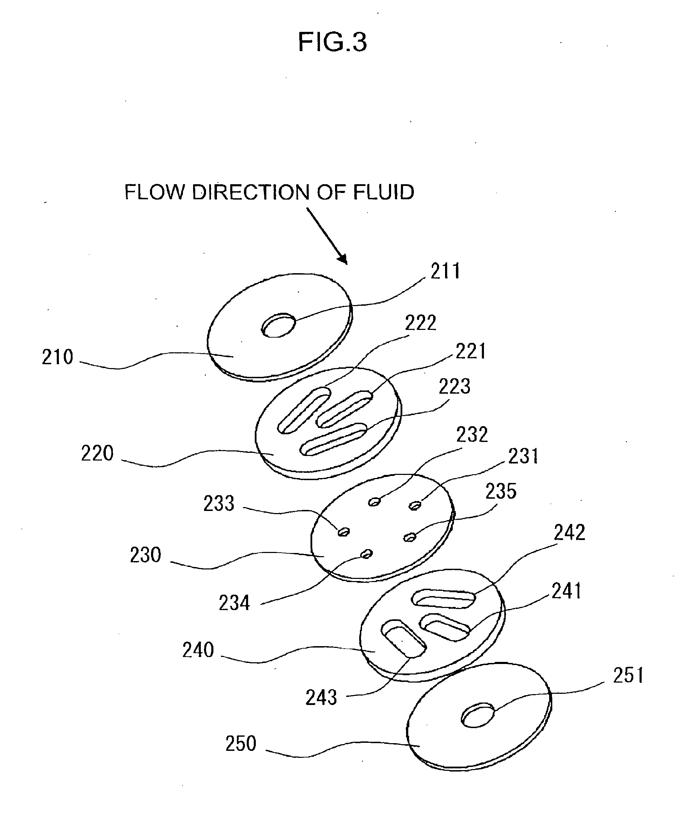

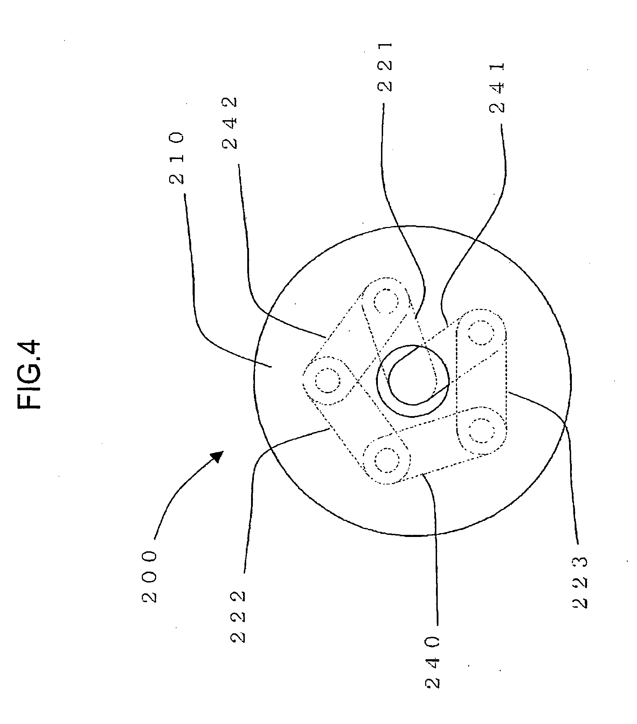

As shown in Figs. 3 and 4, the restricting element 200 is formed by stacking a first passing member 210, a first passage member 220, an opening member 230, a second passage member 240, and a second passing member 250 in the named order with respect to the flow direction of the fluid 110.

The first passing member 210 is formed by forming the inlet hole 211 into which a fluid flows in a thin disk member.

The first passage member 220 is formed by forming, for example, three elongated holes 221, 222, and 223 in a disk member with a thickness which can secure a larger pass area than the pass area of each of restriction holes 231 to 235 provided in the opening member 230 with respect to the flow direction of the fluid. The elongated hole 221 is arranged to face the inlet hole 211.

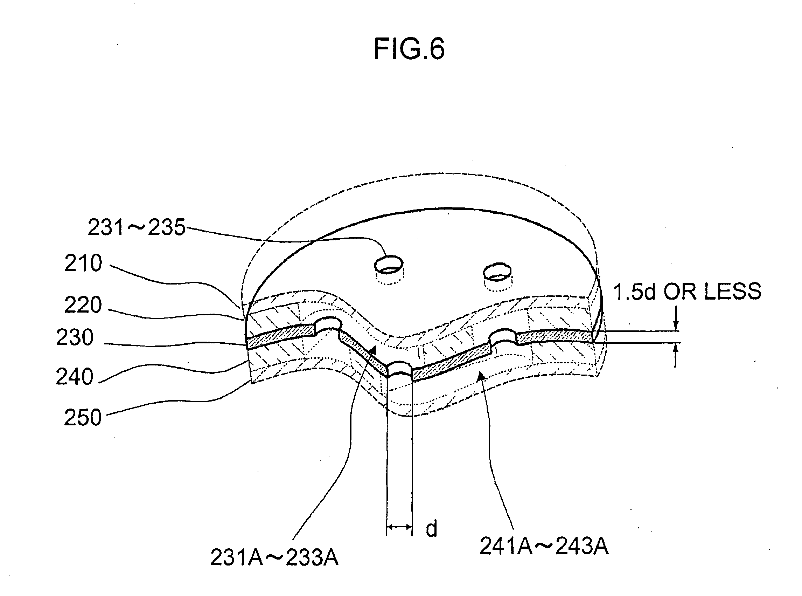

As exemplified in enlargement in Fig. 6, the opening member 230 is formed by boring five restriction holes 231 to 235 in a disk member. The restriction hole 231 is arranged to face the elongated hole 221, the restriction holes 232 and 233 are arranged to face the elongated hole 222, and the restriction holes 234 and 235 are arranged to face the elongated hole 223.

The second passage member 240 is formed by boring three elongated holes 241, 242, and 243 in a disk member with a thickness which can secure a larger pass area than the pass area of each of the restriction holes 231 to 235 provided in the opening member 230 with respect to the flow direction of the fluid. The elongated hole 242 is arranged to face the restriction holes 231, 232, the elongated hole 243 is arranged to face the restriction holes 233, 234, and the elongated hole 241 is arranged to face the restriction hole 235.

The second passing member 250 is formed by boring an outlet hole 251 from which a fluid flows out in a thin disk member. The outlet hole 251 is arranged to face the elongated hole 241.

The individual members of the restricting element 200 formed by stacking the first passing member 210, the first passage member 220, the opening member 230, the second passage member 240, and the second passing member 250 in the named order with respect to the flow direction of the fluid are tightly adhered in such a way as to seal the fluid 110.

It is to be noted that sealing between the individual members may be sealing with contact pressure, but depending on the type of the fluid in use and the use condition such as pressure, a liquid sealing compound, such as liquefied packing, may be used, or a sealant like an O-ring may be intervened.

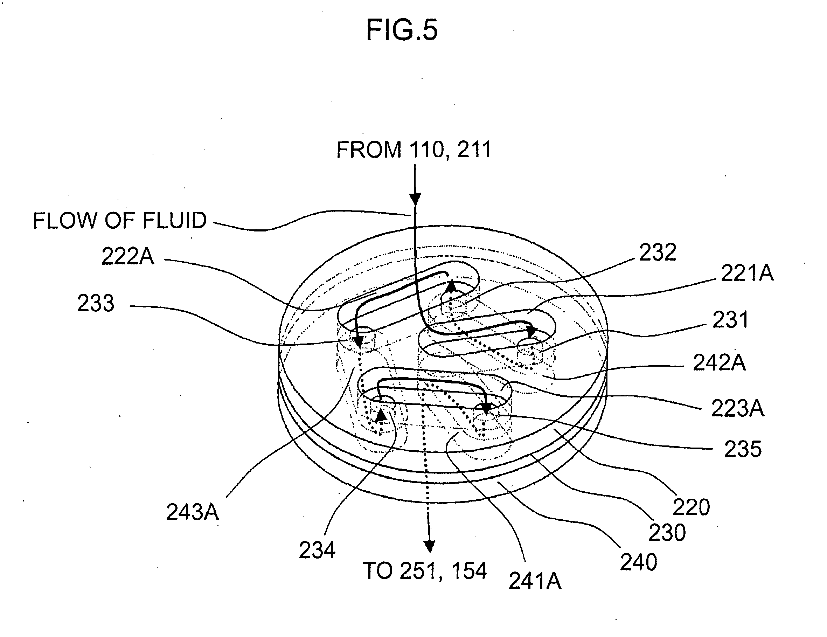

Therefore, in the restricting element 200 according to the embodiment, as shown in Fig. 5 (illustration of the first passing member 210 and the second passing member 250 is omitted in Fig. 5), the fluid which has flowed into the first chamber 120, has been led via the passage 261, and has passed through the inlet hole 211 of the first passing member 210 will flow into a pressure chamber forming passage 221A defined (or formed) by the elongated hole 221 of the first passage member 220 and the first passing member 210.

Then, the fluid which has flowed into the passage passes through the restriction hole 231 formed facing the elongated hole 221, and flows into a pressure chamber forming passage 242A defined by the elongated hole 242 and the second passing member 250.

Next, the fluid which has flowed into the passage passes through the restriction hole 232 formed facing the elongated hole 242, and flows into a pressure chamber forming passage 222A defined by the elongated hole 222 and the first passing member 210.

Next, the fluid which has flowed into the passage passes through the restriction hole 233 formed facing the elongated hole 222, and flows into a pressure chamber forming passage 243A defined by the elongated hole 243 and the second passing member 250.

Next, the fluid which has flowed into the passage passes through the restriction hole 234 formed facing the elongated hole 243, and flows into a pressure chamber forming passage 2223 defined by the elongated hole 223 and the first passing member 210.

Next, the fluid which has flowed into the passage passes through the restriction hole 235 formed facing the elongated hole 223, and flows into a pressure chamber forming passage 241A defined by the elongated hole 241 and the second passing member 250.

Then, this fluid passes through the outlet hole 251 of the second passing member 250 which is formed facing the elongated hole 241, and then flows out to the internal space 154 of the cylindrical portion 152.

Each of the restriction holes 231 to 235 (the inlet hole 211 and the outlet hole 251 may be formed as restriction holes to serve as the plurality of restriction holes) according to the embodiment adopts the structure where the length L in the flow direction of the fluid is set to 1.5d or less from the inlet surface with respect to the hole diameter d, as shown in Fig. 6, and a plurality of restriction holes 231 to 235 are arranged on the opening member 230 which is a single part, as shown in Fig. 3, it is possible to realize the restricting element 200 with a high pressure loss which reduces the influence of a temperature originated change in shearing force, such as pipe friction, at the restricting hole, on the flow rate of a fluid while achieving a simplified structure and weight reduction and compactness. This makes it possible to achieve highly accurate constant flow rate control by suppressing a change in instantaneous flow rate originated from a change in temperature while suppressing occurrence of clogging or the like by keeping the size of the restriction hole to a comparatively large size (hole diameter), and, at the same time, achieve cost reduction originated from reduction in the number of parts, weight reduction, compactness, and improved productivity for the first time.

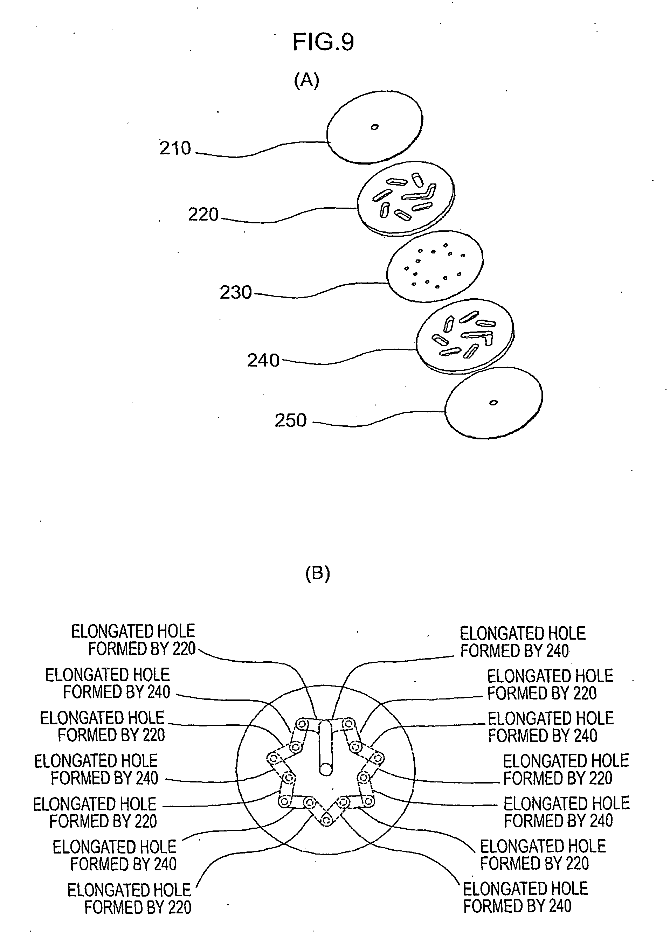

Although an exemplary description of the case where there are five restriction holes has been given, the number of the restriction holes can be changed as needed, e.g., thirteen restriction holes as shown in Figs. 9A and 9B.

Returning to the general configuration in Fig. 1, a description will be given of the general flow of a fluid whose flow rate is to be subjected to constant flow rate control of the constant flow rate control device according to the embodiment.

In the constant flow rate control device according to the embodiment, the fluid which has flowed into the first chamber 120 from the fluid passage 110 on the upstream side passes along the passage 261 of the fixing member 260, and flows into the inlet hole 211 of the first passing member 210 of the restricting element 200.

Then, the restricting element 200 leads this fluid so that it passes through the individual restriction holes 231 to 235 via the passages formed in the pressure chamber forming passages 221A to 223A, 241A to 243A to reduce the fluid pressure to a predetermined level, and then causes the fluid to flow out from the outlet hole 251 of the second passing member 250, as mentioned above.

The fluid which has passed through the restricting element 200 in this manner flows out into the internal space 154 of the cylindrical portion 152, and then flows out to the second chamber 140 via the communication passage 155 provided at the lower end wall 153.

Then, the fluid passes through the clearance between the valve seat 170A and the needle valve 150A which has a predetermined restriction effect of making the pressure difference between the first chamber 120 and the second chamber 140 constant, and flows out to the outlet passage 170 and eventually to the fluid passage 110 on the downstream side.

The constant flow rate control device according to the embodiment operates as follows to control the flow rate of the fluid which passes through the constant flow rate control device to a predetermined flow rate (target flow rate).

Namely, when the pressure of the fluid flowing into the first chamber 120, for example, rises from the state where the input flow rate of the fluid from the fluid passage 110 on the upstream side to the first chamber 120, and the flow rate of the fluid which passes through between the valve seat 170A and the needle valve 150A are equal to each other, so that the pressure difference between the pressure of the fluid flowing into the first chamber 120 and the pressure of the fluid in the second chamber 140 becomes larger than the set pressure, the diaphragm 130 and the movable valve 151 are moved in a valve closing direction (downward in Fig. 1) against the elastic force of the coil spring 160. As a result, the clearance between the valve seat 170A and the needle valve 150A becomes smaller, keeping constant the pressure difference between the pressure of the fluid which flows into the first chamber 120 and the pressure of the fluid in the second chamber 140, thus suppressing the passing flow rate of the fluid which passes through the clearance from increasing due to the rise of the pressure of the fluid, and keeping the flow rate of the fluid flowing out.

When the pressure of the fluid that flows into the first chamber 120 drops, on the other hand, the diaphragm 130 and the movable valve 151 move in a valve opening direction (upward in Fig. 1). As a result, the clearance between the valve seat 170A and the needle valve 150A becomes larger, keeping constant the pressure difference between the pressure of the fluid in the second chamber 140 and the pressure of the fluid which flows into the first chamber 120. This suppresses the passing flow rate of the fluid which passes through the clearance from decreasing due to the fall of the pressure of the fluid, thereby keeping constant the flow-out rate. It is to be noted that although the needle valve is a part of the movable valve in the embodiment, a needle valve made by a separate part may be integrally attached to the movable valve. Alternatively, it is possible to adopt a mounting method of permitting those valves, even if movably attached together, to behave integrally at the time of controlling the pressure difference.

According to the constant flow rate control device of the embodiment, as described above, in the restricting element 200, a plurality of restriction holes 231 to 235 (the inlet hole 211 and the outlet hole 251 may be formed as restriction holes to function as the plurality of restriction holes) are provided on the single opening member 230, and the fluid is caused to pass through the passages (pressure chamber forming passages) 221A to 223A, 241A to 243A, which form the pressure chambers, in order, so that the pressure loss coefficient of the entire restricting element 200 where the fluid passes can be comparatively large. In case of controlling the flow rate to the same flow rate, the constant flow rate control device of the embodiment can set the effective area of the restriction hole larger than that of the conventional constant flow rate valve.

According to the constant flow rate control device of the embodiment, therefore, in case of controlling the flow rate to a minute flow rate (e.g., when a minute flow rate of the order of 0.1 kg/min or a very minute flow rate of the order of 0.001 kg/min), it is possible to effectively repress misgivings that clogging or the like is likely to occur due to the small diameter of the orifice and the scale, slime, foreign matter, dust, etc., and regular maintenance is needed. With regard to clogging or the like, it is advantageous that the shapes of the restriction holes of the restricting element 200 are circular in view of the clearance to a foreign matter or the like, which is not restrictive. In addition, the constant flow rate control device can effectively repress misgivings that a bacteria or the like, if mixed in a fluid, especially pure water, may grow and clog the orifice, which may occur in the case of the conventional constant flow rate valve using a small-diameter orifice.

Since, according to the embodiment, the diameters of the restriction holes of the restricting element 200 can be set comparatively large, making it easier to process the restriction holes, which can provide a high yield and improve the productivity, the product quality, etc., and eventually promote cost reduction.

Further, according to the embodiment, each of the restriction holes 231-235 (the inlet hole 211 and the outlet hole 251 may be formed as restriction holes to serve as the plurality of restriction holes) adopts the structure where the length L in the flow direction of the fluid is set to 1.5d or less from the inlet surface with respect to the hole diameter d, and a plurality of restriction holes 231-235 are arranged on the opening member 230 which is a single part, it is possible to realize the restricting element 200 with a high pressure loss which reduces the influence of a temperature originated change in shearing force, such as pipe friction, at the restricting hole, on the flow rate of a fluid while achieving a simplified structure and weight reduction and compactness. This makes it possible to achieve highly accurate constant flow rate control by suppressing a change in instantaneous flow rate originated from a change in temperature while suppressing occurrence of clogging or the like by keeping the size of the restriction hole to a comparatively large size (hole diameter), and, at the same time, achieve cost reduction originated from reduction in the number of parts, weight reduction, compactness, and improved productivity for the first time.

According to the embodiment, the first passing member 210, the first passage member 220, the opening member 230, the second passage member 240, and the second passing member 250 of the restricting element 200 may be formed by etching (in case of the etching process, for example, a stainless member can be used as one example of the material for those members), and further those members may be adhered to be integral, so that they can be integrally formed as an assembly part having a restricting function by diffusion bonding. This can simplify the steps of assembling the constant flow rate control device, and enables inspection of the controlled flow rate on the restricting element alone, making it possible to simplify the inspection procedures too. The adhesion method is not limited to diffusion bonding, and another bonding method, such as thermal compression bonding, ultrasonic welding, thermal welding or use of an adhesive may be adopted.

For example, if the inspection of flow rates is carried out on a product of the final form, there are a wide range of parts to be discarded, removed and subjected to inspection of failing parts at the time a failure is detected, whereas if the inspection of flow rates can be carried out in a state where the parts constituting the restricting element 200 are connected to assemble a functional part (i.e., assembly part which has the above-described restricting function), detection of a failure in the functional part alone is possible, so that an adverse influence to the next and subsequent steps can be prevented, and the productivity can be improved by reducing the number of steps, and reducing the risk of assembling bad parts.

Since the restricting element 200 is made functional as a single part, the restriction characteristic (pressure loss) can be inspected without assembling the element into the product. Even when the fluid is water, therefore, the restricting element 200 need not be assembled into the product until the step of securing water tightness, and inspection of the characteristic with air can be carried out in the atmosphere instead, which brings about an effect of eliminating the need for the drying step after water flow test.

Although Fig. 1 and Fig. 2 show the mode where the fixing member 260 is fixed by threaded insertion, which is not restrictive in the embodiment.

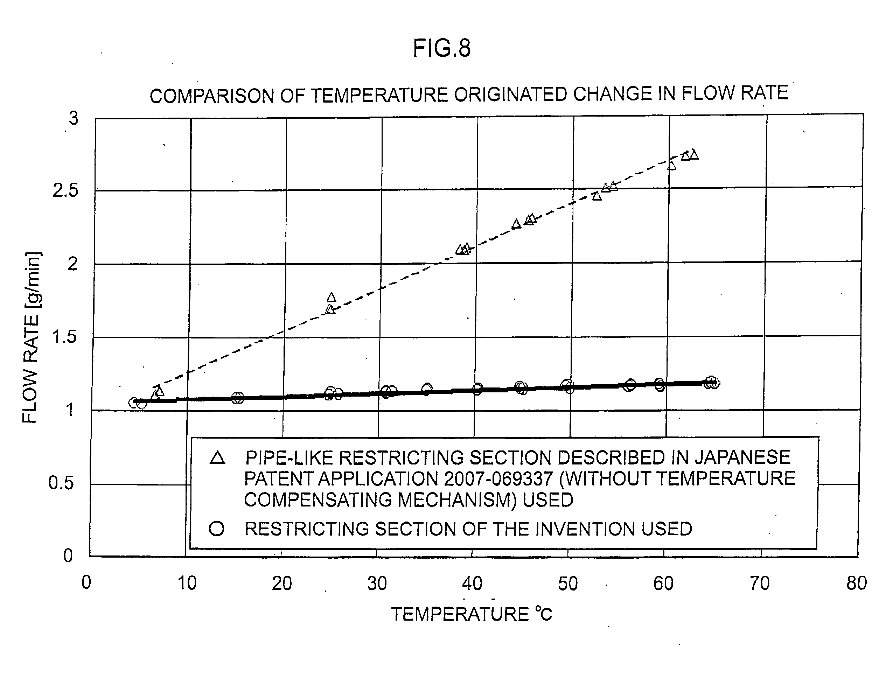

Fig. 8 shows experimental data when the constant flow rate control device is designed, for example, under the condition that the outer size is 50 mm x 50 mm or less. It is apparent from Fig. 8 that a change in flow rate near 65°C from a reference which is flow rate data near, for example, 5°C is increased by approximately 130% in the constant flow rate control device (having no temperature compensating mechanism) which has three pipe-like restricting sections described in Japanese Patent Application No. 2007-069377, whereas such a change in flow rate in the constant flow rate control device according to the invention (having thirteen restriction holes provided) is suppressed to an increase of approximately 13%. It is confirmed that the invention can effectively improve the influence of the temperature on the flow rate control characteristic.

[Second Embodiment]

Next, a second embodiment of this invention will be described.

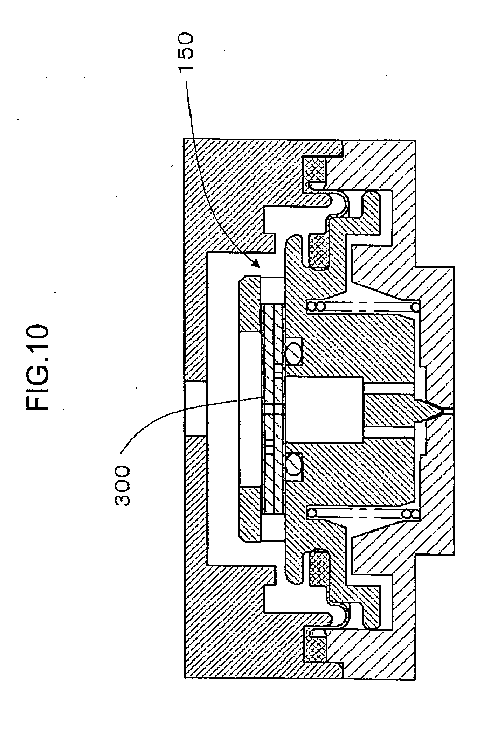

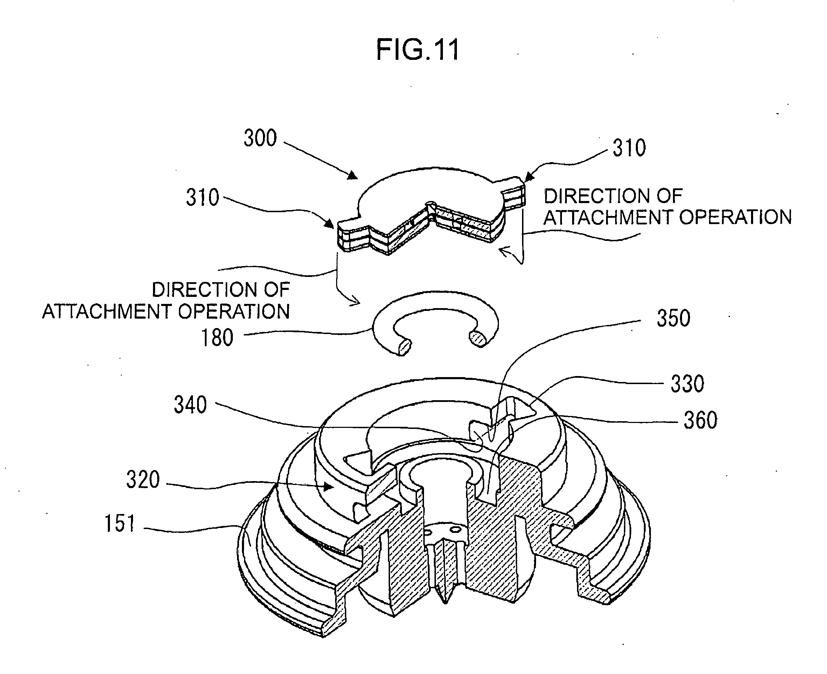

As shown in Figs. 10 and 11, the second embodiment differs in the structure of the restricting element provided in the restricting section 150 from the constant flow rate control device described in the description of the first embodiment.

Therefore, a detailed description will be given of the restricting element having the different structure, and same reference numerals are given to those parts which are the same as the corresponding parts of the first embodiment to avoid their detailed descriptions.

In the second embodiment, a restricting element 300 is adopted instead of the restricting element 200 according to the first embodiment as the restricting element of the restricting section 150.

This restricting element 300 includes the first passing member 210 and the first passage member 220 in the first embodiment, an opening member 330, the second passage member 240 and the second passing member 250 formed integrally by, for example, diffusion bonding. Two projections 310 are provided at the outer periphery of the restricting element 300.

According to the embodiment, push-in rotational fixation is exemplified as the method of fixing the restricting element to the movable valve. Specifically, as shown in Fig. 11, the method is achieved by a structure which has the projections 310, insertion grooves 330 provided in a movable valve top portion 320 in such a way that the projections 310 are insertable therein in the axial direction, rotation stoppers 340 which defines the range of rotation of the projections 310 after being inserted in the insertion grooves 330, and hold walls 350 for preventing the projections 310 from coming off in the axial direction after the projections 310 reach the rotation stoppers 340.

As the projections 310 provided on the outer periphery of the restricting element 300 are inserted in the insertion grooves 330 and turned, the movable valve top portion 320 and the restricting element 300 are engaged with each other, so that a contact seal can be formed by pressing the sealant 180 intervened between the downstream surface of the restricting element 300 and a sealant applying groove 360. As a result, as shown in Fig. 10, the projections 310 are pressed against the hold walls 350 by reactive force from the sealant 180 while keeping predetermined sealing, causing the restricting element 300 to be integrally fixed to the movable valve top portion 320.

As apparent from the above, the constant flow rate control device according to the embodiment can eliminate parts, such as the fixing member described in the description of the first embodiment, making the configuration simpler.

In addition, the projections can be formed or molded simultaneously when the restriction element 300 is produced. Therefore, the constant flow rate control device can be provided at a low cost.

[Third Embodiment]

Next, a third embodiment of the invention will be described.

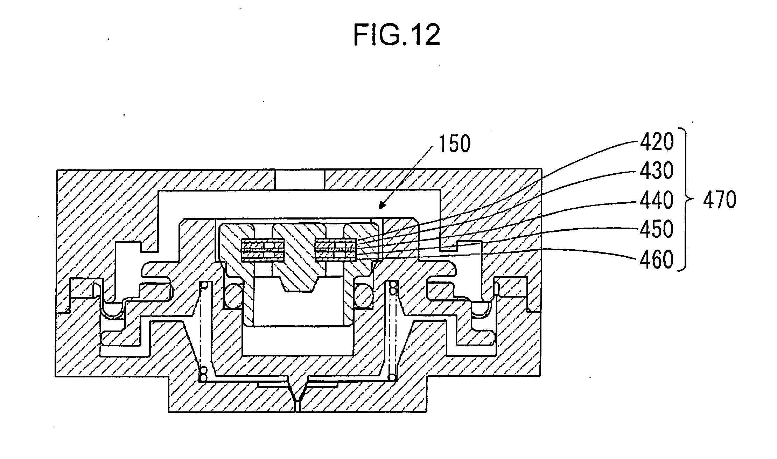

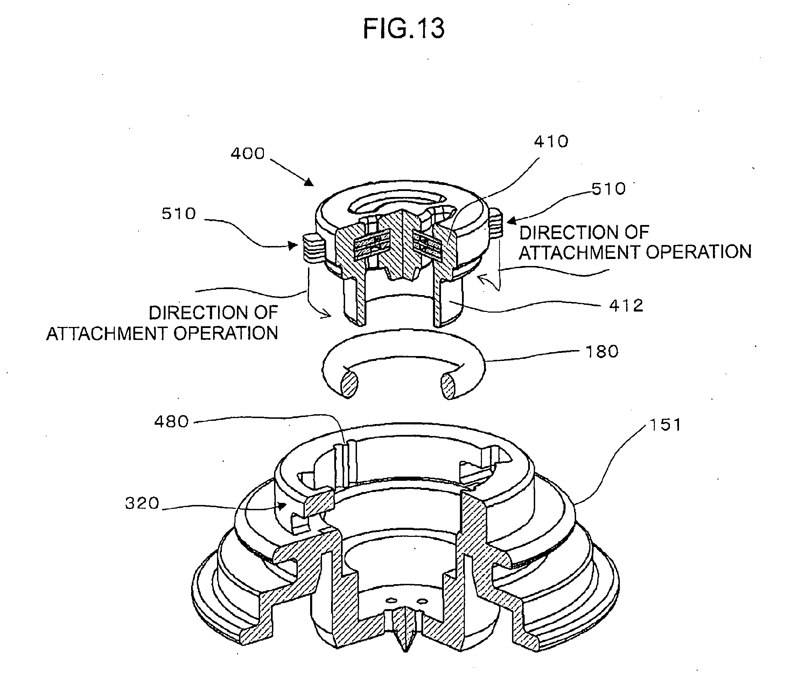

As shown in Figs. 12 and 13, the third embodiment differs in the structure of the restricting element provided in the restricting section 150 from the constant flow rate control device described in the description of the second embodiment.

Therefore, a detailed description will be given of the restricting element, and same reference numerals are given to those parts which are the same as the corresponding parts of the second embodiment to avoid their detailed descriptions.

In the third embodiment, a restricting element 400 is adopted instead of the restricting element 300 according to the second embodiment as the restricting element of the restricting section 150.

As shown in Figs. 12 to 15, this restricting element 400 uses an insert part 470 formed by stacking an inner-periphery penetrating first passing member 420 having an inner-periphery penetrating hole 421 other than the inlet hole, an inner-periphery penetrating first passage member 430 having an inner-periphery penetrating hole 431 other than the elongated hole, an inner-periphery penetrating opening member 440 having an inner-periphery penetrating hole 441 other than the restriction hole, an inner-periphery penetrating second passage member 450 having an inner-periphery penetrating hole 451 other than the elongated hole, and an inner-periphery penetrating second passing member 460 having an inner-periphery penetrating hole 461 other than the outlet hole in the named order in place of the first passing member, the first passage member, the opening member, the second passage member and the second passing member in the first embodiment, and a hold member 410 formed by resin molding, such as insert molding or outsert molding. The restricting element 400 is structured to support and enclose the outer peripheral portion and the inner peripheral portion (inner-periphery penetrating portions) so that the insert part 470 can be kept in a properly and tightly fixed state by using the contraction of the hold member 410 after molding.

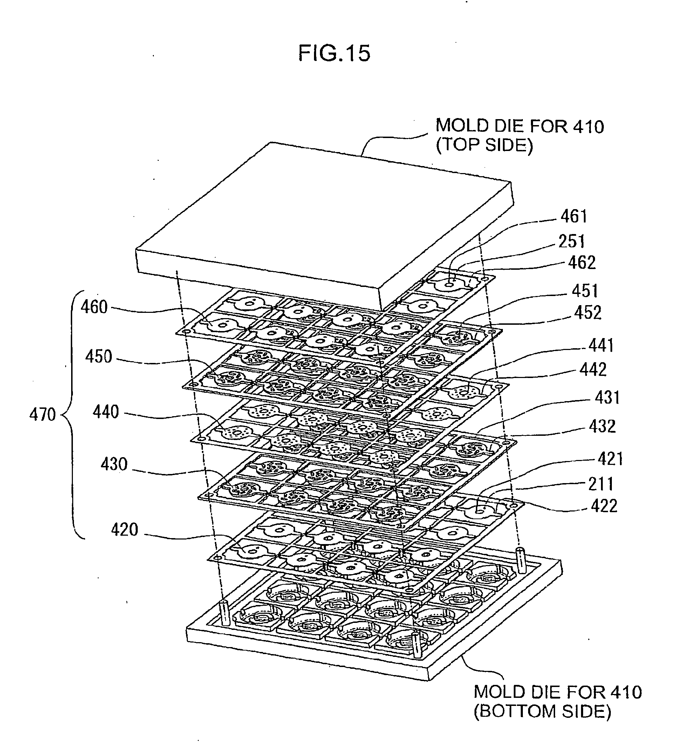

As shown in Fig. 15, it is possible to adopt a production method of simultaneously forming a plurality of restricting elements 400 by stacking a plate having a plurality of inner-periphery penetrating first passing members 420 formed on a thin blank and supported by narrow support portions by etching, punching or the like, a plate likewise having a plurality of inner-periphery penetrating first passage members 430 formed thereon, a plate likewise having a plurality of inner-periphery penetrating opening members 440 formed thereon, a plate likewise having a plurality of inner-periphery penetrating second passage members 450 formed thereon, and a plate likewise having a plurality of inner-periphery penetrating second passing members 460 formed thereon, and integrally forming the restricting elements 400 (e.g., integral molding) with a plurality of hold members 410 by molding, such as insert molding or outsert molding, and individually separating the hold members 410 after the molding to provide finished articles.

At this time, the stacked plates are available in a state where they are adhered beforehand or a state where they are not adhered.

This can ensure molding of a large amount of articles, making it possible to reduce the cost, and form various shapes on the hold member by molding, i.e., the degree of freedom of design is increased, ensuring enhanced functions of the restricting element.

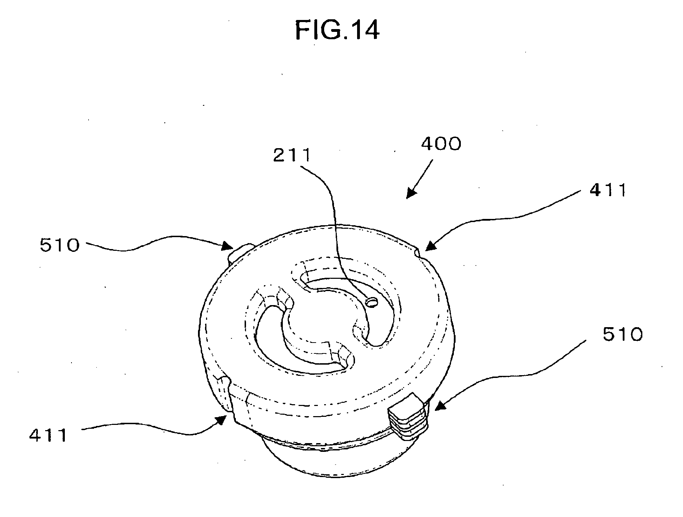

For example, according to the embodiment, rotational snap-fit claw portions 480 may be formed at the movable valve top portion as shown in Fig. 13, and rotational snap-fit claw receiving portions 411 may be formed at the outer portion of the hold member 410 as shown in Fig. 14 in association therewith.

Further, according to the embodiment, a hold-member cylindrical portion 412 which forms the inside of the cylindrical portion 152 via the sealant 180, and an axial seal structure may be provided as shown in Fig. 13.

Projections 510 are formed on the outer periphery of the restricting element 400 as shown in Fig. 14 using support portions 422, 432, 442, 452, 462 of the blank which are needed at the time of molding like inserting molding or outsert molding as shown in Fig. 15, and become unnecessary after molding.

The positional relation among the projections 510, the insertion grooves 330, the rotation stoppers 340, the hold walls 350, the rotational snap-fit claw receiving portions 411, and the rotational snap-fit claw portions 480 will be described.

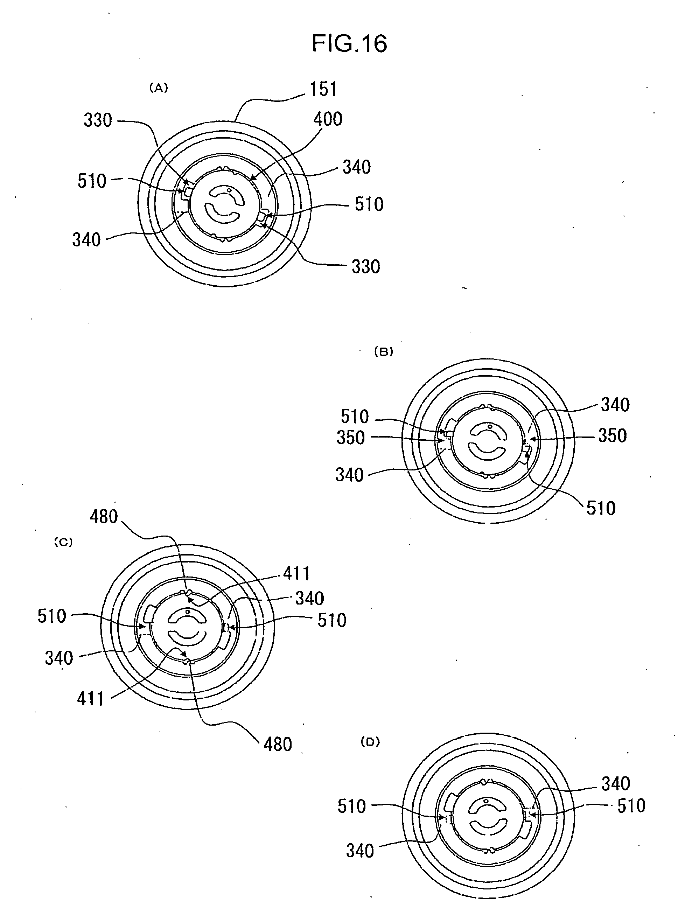

As shown in Fig. 16A, the insertion grooves 330 are formed with such a shape that allows the projections 510 to be inserted in the axial direction.

First, the projections 510 are inserted in the insertion grooves 330, then the projections 510 are rotated toward the rotation stoppers 340 as shown in Fig. 16B to reach positions where they are prohibited from coming off in the axial direction by the hold walls 350.

When the projections 510 are further rotated toward the rotation stoppers 340, the rotational snap-fit claw receiving portions 411 is engaged with the rotational snap-fit claw portions 480 to prevent reverse rotation as shown in Fig. 16C.

When the projections 510 are further rotated, the projections 510 reach the rotation stoppers 340 to be unrotatable as shown in Fig. 16D, so that the restricting element 400 establishes the positional relation where it cannot be substantially rotated forward or reversely, or does not come off in the axial direction.

According to the embodiment, as shown in Figs. 12 and 13, therefore, the use of the rotational snap-fit fixing method permits the hold-member cylindrical portion 412 to form the inside of the cylindrical portion 152 via the sealant 180 and the axial seal, securing predetermined sealing, and permits the restricting element 400 to be permanently and integrally provided at the movable valve top portion 320 (i.e., the movable valve 151) with high reliability without using the reactive force of the sealant 180.

In addition, the use of the rotational snap-fit fixing method permits the restricting element 400 and the movable valve 151 to be detachable with a dedicated tool without breaking the parts at the time of, for example, reassembling.

Since the restricting element is integrated by resin molding according to the constant flow rate control device of the embodiment, the constant flow rate control device can be produced at a low cost.

Since the molding integration of the restricting element permits designing of enhanced functions using the outer portions of the restricting element, it is possible to design an axial seal which is difficult in an insert article as done in the embodiment, and separately design the seal portion which demands severe precision and the fixing portion of the restricting element which is allowed to have an ordinary precision, thereby increasing the degree of freedom of layout, which leads to rationalization of the design.

The mold integration of the restricting element can provide the outer portion of the restricting element with a rotational snap-fit capability, making it possible to reliably prevent the restricting element from coming off. Further, clicking feeling is obtained at the time of assembling, so that it is easily determined if the proper assembling is carried out, thus providing products with improved productivity, stable quality and improved reliability.

Although the restricting element 400 has the projections 510 formed on the outer peripheral portion by the insert part 470, similar projections may be formed on the outer peripheral portion of the hold member.

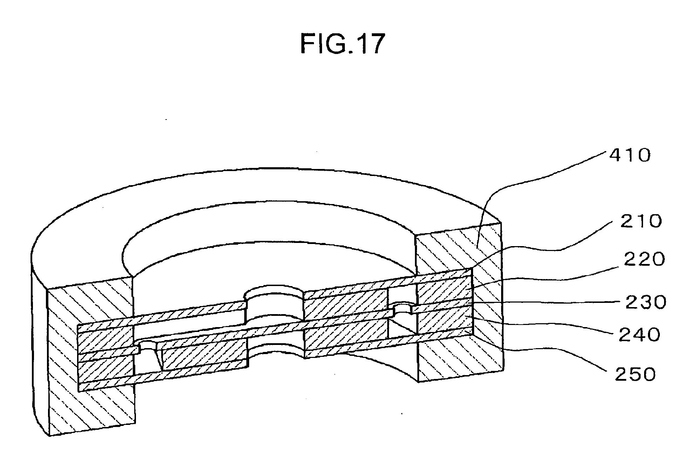

Although the hold members 410 are formed at the outer peripheral portion and the inner peripheral portion to hold the insert part 470 in a tightly fixed state in the embodiment, the hold member 410 can be formed only at the outer peripheral portion of the restricting element 200 formed, for example, by stacking the first passing member 210, the first passage member 220, the opening member 230, the second passage member 240 and the second passing member 250 of the first embodiment in the named order in the flow direction of the fluid as shown in Fig. 17 according to the precision of the flow rate control on the fluid.

Although a resin is used as the material for the hold member at the time of molding in the embodiment, molding with rubber, urethane, silicon or aluminum or another metal is also possible.

According to the foregoing second and third embodiments of the invention, the restricting section whose length in the flow direction is set to 1.5d or less as described in the description of the first embodiment, and a plurality of restricting sections are provided to increase the number of contractions to increase the pressure loss coefficient, thus making it possible to increase the effective area of the restricting element while suppressing the temperature-originated influence as compared with the conventional constant flow rate valve.

In addition, since the structure where a plurality of restriction holes are laid out on the opening member which is a single part is adopted, it is possible to realize the restricting element with a high pressure loss which reduces the influence of a temperature originated change in shearing force, such as pipe friction, at the restricting hole, on the flow rate of a fluid while achieving a simplified structure and weight reduction and compactness. This makes it possible to achieve highly accurate constant flow rate control by suppressing a change in instantaneous flow rate originated from a change in temperature while suppressing occurrence of clogging or the like by keeping the size of the restriction hole to a comparatively large size (hole diameter), and, at the same time, achieve cost reduction originated from reduction in the number of parts, weight reduction, compactness, and improved productivity for the first time.

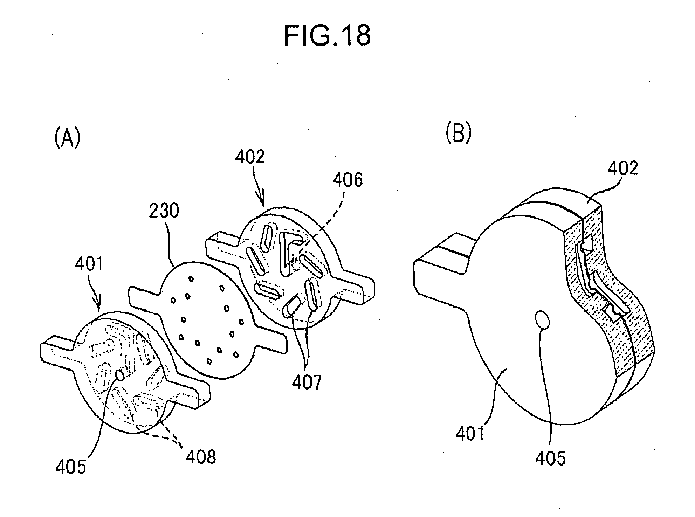

Although the descriptions of the first to third embodiments have been given of the case where the integrated restricting element is formed as means for forming the restriction holes and passages by stacking parts which form a five-layer structure, the means for forming the restriction holes and passages may be formed by parts having three-layer structure or a four-layer structure for the first passing member and one of adjoining parts of the first passage member, the second passing member, the second passage member and the opening member can be formed by a single part as shown in Figs. 18A, 18B, 19A, 19B, 20A and 20B.

Fig. 18 shows an example where the means is formed by parts having a three-layer structure including a member 401 which has the functions of both the first passing member and the first passage member, the opening member 230, and a member 402 which has the functions of both the second passing member and the second passage member. That is, the opening member 230 is held between the member 401 and the member 402 in Fig. 18. The member 401 has an inlet hole 405 and an elongated hole 408 formed therein, and the member 402 has an outlet hole 406 and an elongated hole 407 formed therein.

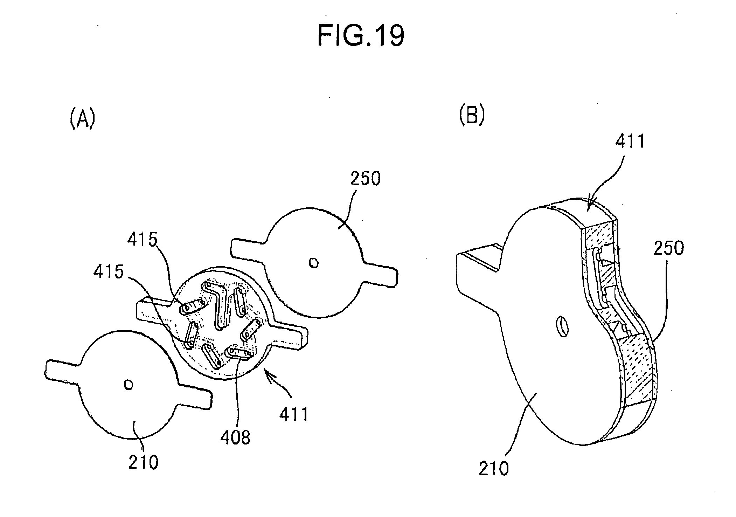

Fig. 19 shows an example where the means is formed by a three-layer structure including a member 411 held between the first passing member 210 and the second passing member 250. This member 411 has an elongated hole 408 formed in both sides thereof, and a restriction hole 415 formed in the intermediate layer.

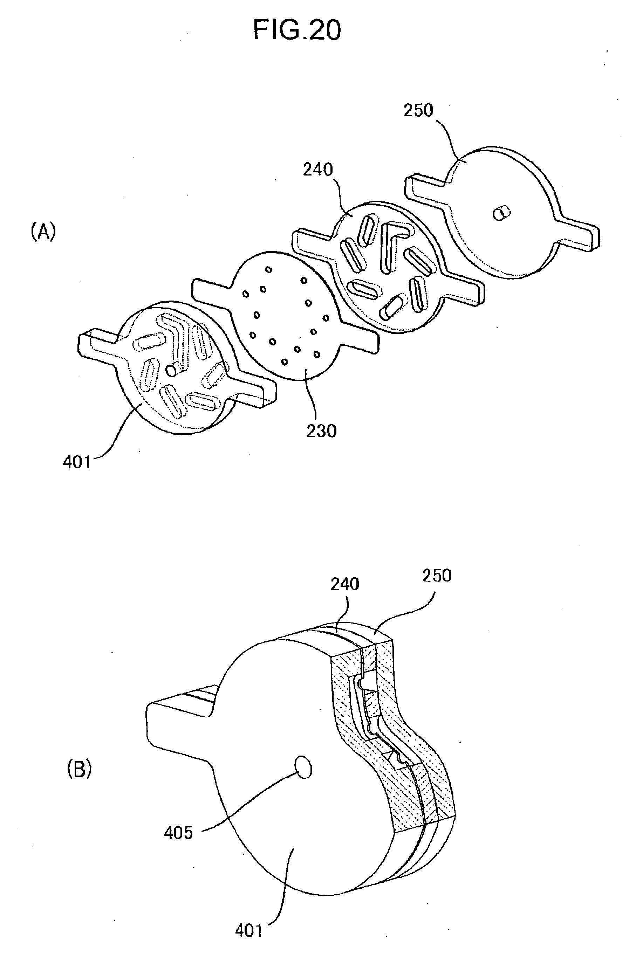

Fig. 20 shows an example where the means is formed by a four-layer structure having the aforementioned member 401 which has the functions of both the first passing member and the first passage member, the opening member 230, the second passage member 240 and the second passing member 250.

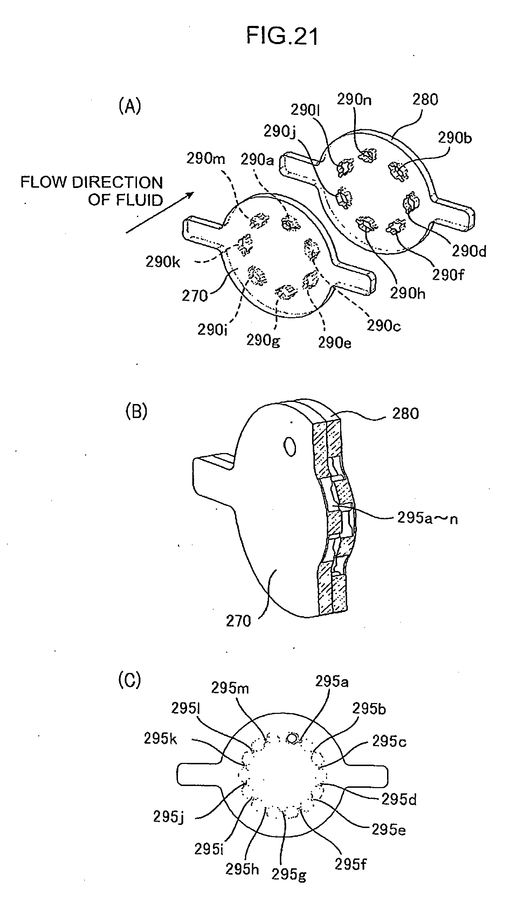

Further, although a restriction hole is provided in the opening member as means for forming the restriction hole in the first to third embodiments, for example, the means for forming the restriction hole may be structured so that an inlet side member 270 having the first passing member and the first passage member formed by a single part, and an outlet side member 280 having the second passing member and the second passage member 240 formed by a single part are stacked in such a way that pressure chamber forming passages 290a to 290n sequentially form passages for the flow of the fluid while forming an overlapped portion, so that restriction holes 295a to 295n are formed and arranged on the contact surface, as shown in Figs. 21A to 21C, thereby allowing the restricting element to be formed by parts which make a two-layer structure.

According to each embodiment of the invention, in case of controlling the flow rate to a minute flow rate, it is possible to effectively repress misgivings that clogging or the like is likely to occur due to the small diameter of the orifice and the scale, slime, foreign matter, dust, etc., and regular maintenance is needed. With regard to clogging or the like, it is advantageous that the shapes of the restriction holes of the restricting element are circular in view of the clearance to a foreign matter or the like, which is not restrictive. In addition, the constant flow rate control device can effectively repress misgivings that a bacteria or the like, if mixed in a fluid, especially pure water, may grow and clog the orifice, which may occur in the case of the conventional constant flow rate valve using a small-diameter orifice.

Since, according to each embodiment of the invention, the diameters of the restriction holes of the restricting element can be set comparatively large, making it easier to process the restriction holes, which can provide a high yield and improve the productivity, the product quality, etc., and eventually promote cost reduction.

The embodiments described above are only illustrative examples for explaining the invention, and may be modified variously without departing from the scope of the invention.

Industrial Applicability

The present invention, even with a comparatively low-cost, simple and compact structure, is easy to process and excellent in productivity, and can carry out high-precision constant rate control while suppressing occurrence of clogging or the like to provide a maintenance-free condition even in the case of carrying out constant rate control on a minute flow rate, thereby securing the productivity and reliability as well as achieving high precision of constant flow rate control, and is useful as a constant flow rate control device which controls a fluid to a predetermined flow rate and which is used in a water purifying system, a bathroom sauna apparatus, a gas dissolving apparatus, a pure water providing apparatus, a water survey apparatus, a semiconductor manufacturing apparatus, a fuel cell system, a chemical synthesis apparatus, etc.

Brief Description of the Drawings

[Fig. 1] A cross-sectional view showing the general configuration of a constant flow rate control device according to a first embodiment of the invention.

[Fig. 2] A perspective view schematically showing the cross sections of individual elements in Fig. 1 separated in the embodiment.

[Fig. 3] A perspective view showing a restricting element in enlargement in the embodiment.

[Fig. 4] A diagram showing the relative positional relation between elongated holes and restriction holes of the restricting element in the embodiment.

[Fig. 5] A perspective view for explaining the flow of a fluid in the restricting element in the embodiment.

[Fig. 6] A perspective partly cross-sectional view showing a structural example of the restriction hole in the embodiment.

[Fig. 7] A diagram for explaining the flow of a fluid in the restriction hole.

[Fig. 8] A diagram (experimental results) showing temperature-originated changes in flow rate according to the invention and the conventional device.

[Fig. 9] A diagram showing one example of a case where the number of restriction holes in the embodiment is increased.

[Fig. 10] A cross-sectional view showing the general configuration of a constant flow rate control device according to a second embodiment of the invention.

[Fig. 11] A perspective view schematically showing the partial cross section of a restricting section separated from the constant flow rate control device according to the second embodiment.

[Fig. 12] A cross-sectional view showing the general configuration of a constant flow rate control device according to a third embodiment of the invention.

[Fig. 13] A perspective view schematically showing the partial cross section of a restricting section separated from the constant flow rate control device according to the third embodiment.

[Fig. 14] A perspective view showing the restricting element in enlargement in the third embodiment.

[Fig. 15] A diagram for explaining one example of a method of molding the restricting element in the third embodiment.

[Fig. 16] A diagram for explaining one example of a method of fixing a movable valve and the restricting element in the third embodiment.

[Fig. 17] A diagram for explaining one example of a method of molding the restricting element in the third embodiment (molding only the outer periphery).

[Fig. 18] A perspective view showing one example of a lamination structure (three-layer structure) of members constituting the restricting element in the invention.

[Fig. 19] A perspective view showing one example of a lamination structure (three-layer structure) of members constituting the restricting element in the invention.

[Fig. 20] A perspective view showing one example of a lamination structure (four-layer structure) of members constituting the restricting element in the invention.

[Fig. 21] A perspective view showing one example of a lamination structure (two-layer structure) of members constituting the restricting element in the invention.

[Fig. 22] A diagram for explaining the relation between the flow rate in a constant flow rate valve and an orifice diameter.

[Fig. 23] A cross-sectional view showing a configuration example of a conventional constant flow rate valve. Description of Reference Numerals

| 100 | Constant flow rate control device |
| 110 | Fluid passage |
| 120 | First chamber |
| 130 | Diaphragm |
| 140 | Second chamber |
| 150 | Restricting section |
| 150A | Needle valve |
| 151 | Movable valve |
| 160 | Coil spring |
| 170A | Valve seat |
| 180 | Sealant |
| 200 | Restricting element |
| 210 | First passing member (entrance side) |
| 211 | Inlet hole |
| 220 | First passage member |
| 221-223 | Elongated hole |
| 221A to 223A | Pressure chamber forming passage |
| 230 | Opening member |
| 231-235 | Restriction holes |
| 240 | Second passage member |
| 241-243 | Elongated holes |
| 241A to 243A | Pressure chamber forming passage |
| 250 | Second passing member (outlet side) |
| 251 | Outlet hole |
| 300 | Restricting element |
| 310 | Projection |
| 400 | Restricting element |
| 410 | Hold member |
| 510 | Projection |

**Claims**

1.  A constant flow rate control device which is intervened in a fluid passage to control a flow rate of fluid flowing in the fluid passage to a predetermined flow rate, the constant flow rate control device configured to include:

    a first chamber (120) into which the fluid flows from an upstream fluid passage (110);
    a second chamber (140) connected to a downstream fluid passage;
    a diaphragm (130) that defines the first chamber (120) and the second chamber (140);
    a restricting section (150) having a plurality of restriction holes which provides a pressure difference between the first chamber (120) and the second chamber (140);
    a movable valve (151) integrally attached to the diaphragm (130);
    a valve seat (170A) provided for the movable valve (151) and facing a passage connecting the second chamber (140) and the downstream fluid passage (110); and
    an elastic member (160) that urges the movable valve (151) with a predetermined elastic force,
    wherein the restricting section (150) includes a restricting element (200) and is structured integral with the movable valve (151),
    the restricting element (200) has all or some of the plurality of restriction holes (231 to 235) arranged in parallel on a same plane,
    **characterised in that**
    restricting element forming parts (210 to 250) having holes and/or grooves are stacked tightly in such a way that the restriction holes (231 to 235) are communicated (connected) with each other by pressure chamber forming passages (221A to 223A, 241 A to 243A) having fluid pass areas larger than the restriction holes at a top and a back of the plane, and fluid flowed from an inlet hole (211) passes through the restriction holes (231 to 235) in one route in order and flows out from an outlet hole (251)without being leaked.

2.  The constant flow rate control device according to claim 1, wherein the inlet hole (211) and the outlet hole (251) are provided facing each other at both extremities of the tightly stacked restricting element forming parts (210 to 250).

3.  The constant flow rate control device according to claim 1 or 2, wherein the restriction holes are formed in such a way that a length of the restriction holes (231 to 235) in a fluid flowing direction is 1.5d or less with respect to a diameter d of a circle having a same area as a pass area of the restriction holes.

4.  The constant flow rate control device according to claims 1 to 3, wherein the restricting element forming parts (210 to 250) of the restricting element (200) are formed by etched articles.

5.  The constant flow rate control device according to any one of claims 1 to 4, wherein the restricting element forming parts (210 to 250) of the restricting element (200) are integrated by adhesion.

6.  The constant flow rate control device according to claim 1, wherein the restricting element forming parts of the restricting element (400) are integrated by molding.

7.  The constant flow rate control device according to claim 6, wherein the restricting element forming parts of the restricting element (400) are integrated by molding and are molded from both of an outer peripheral side and an inner peripheral side of the restricting element forming parts.

**Patentansprüche**

1.  Vorrichtung zum Steuern einer konstanten Durchflussmenge, die in einem Flüssigkeitsdurchlass eingesetzt ist, um eine Durchflussmenge von Flüssigkeit, die in dem Flüssigkeitsdurchlass strömt, auf eine vorgegebene Durchflussmenge zu steuern, wobei die Vorrichtung zum Steuern einer konstanten Durchflussmenge so ausgebildet ist, dass sie umfasst:

    eine erste Kammer (120), in die die Flüssigkeit von einem Flüssigkeitsdurchlass (110) auf der stromaufwärts gelegenen Seite strömt,
    eine zweite Kammer (140), die mit einem Flüssigkeitsdurchlass auf der stromabwärts gelegenen Seite verbunden ist,
    eine Membran (130), die die erste Kammer (120) und die zweite Kammer (140) abgrenzt,

einen Begrenzungsabschnitt (150), der eine Anzahl von Begrenzungslöchern aufweist, die eine Druckdifferenz zwischen der ersten Kammer (120) und der zweiten Kammer (140) ermöglicht,

ein bewegliches Ventil (151), das einstückig an der Membran (130) befestigt ist,

einen Ventilsitz (170A), der für das bewegliche Ventil (151) vorgesehen ist und einem Durchlass gegenüberliegt, der die zweite Kammer (140) und den Flüssigkeitsdurchlass (110) auf der stromabwärts gelegenen Seite verbindet, und

ein flexibles Element (160), das das bewegliche Ventil (151) mit einer vorgegebenen Federkraft antreibt,

wobei der Begrenzungsabschnitt (150) ein Begrenzungselement (200) aufweist und einstückig mit dem beweglichen Ventil (151) ausgebildet ist,

alle oder einige der Anzahl von Begrenzungslöchern (231-235) des Begrenzungselements (200) parallel auf der gleichen Ebene angeordnet sind,

**dadurch gekennzeichnet,**

**dass** das Begrenzungselement bildende Teile (210-250), die Löcher und/oder Nuten aufweisen, in einer solchen Weise eng gestapelt sind, dass die Begrenzungslöcher (231-235) durch Durchlässe (221A-223A, 241A-243A) miteinander verbunden sind, die Druckkammer bilden und Flüssigkeits-Durchlassbereiche aufweisen, die größer als die Begrenzungslöcher an einer Oberseite und an einer Rückseite der Ebene sind, und Flüssigkeit, die von einer Einlassöffnung (211) strömt, durch die Begrenzungslöcher (231-235) in einer Strecke in Reihenfolge durchtritt und ohne zu lecken von einer Auslassöffnung (251) nach außen strömt

2. Vorrichtung nach Anspruch 1, wobei die Einlassöffnung (211) und die Auslassöffnung (251) einander gegenüberliegend an beiden Enden der eng gestapelten, das Begrenzungselement bildenden Teile (210-250) vorgesehen sind

3. Vorrichtung nach Anspruch 1 oder 2, wobei die Begrenzungslöcher in einer solchen Weise gebildet sind, dass eine Länge der Begrenzungslöcher (231-235) in einer Richtung der Flüssigkeitsströmung 1,5 d oder weniger in Bezug auf einen Durchmesser d eines Kreises ist, der eine gleiche Fläche wie ein Durchlassbereich der Begrenzungslöcher hat

4. Vorrichtung nach den Ansprüchen 1 bis 3, wobei die das Begrenzungselement bildenden Teile (210-250) des Begrenzungselements (200) als geätzte Gegenstände ausgebildet sind

5. Vorrichtung nach einem der Ansprüche 1 bis 4, wobei die das Begrenzungselement bildenden Teile (210-250) des Begrenzungselements (200) durch Kleben einstückig ausgebildet sind

6. Vorrichtung nach Anspruch 1, wobei die das Begrenzungselement bildenden Teile des Begrenzungselements (400) durch Formpressen einstückig ausgebildet sind

7. Vorrichtung nach Anspruch 6, wobei die das Begrenzungselement bildenden Teile des Begrenzungselements (400) durch Formpressen einstückig ausgebildet und von einer Außenumfangsseite und einer Innenumfangsseite der das Begrenzungselement bildenden Teile aus durch Formpressen ausgebildet sind.

## Revendications

1. Dispositif de commande de débit d'écoulement constant qui est inséré dans un canal de fluide pour commander un débit d'écoulement de fluide s'écoulant dans le canal de fluide à un débit d'écoulement prédéterminé, le dispositif de commande de débit d'écoulement constant étant configuré pour comporter:

une première chambre (120), dans laquelle le fluide s'écoule d'un canal de fluide disposé en amont (110),

une deuxième chambre (140) qui est raccordée à un canal de fluide disposé en aval,

une membrane (130) qui délimite la première chambre (120) et la deuxième chambre (140),

une section de restriction (150) ayant une pluralité de trous de restriction qui fournit une différence de pression entre la première chambre (120) et la deuxième chambre (140),

une soupape mobile (151) fixée intégralement à la membrane (130),

un siège de soupape (170A) fourni pour la soupape mobile (151) et d'en face d'un canal raccordant la deuxième chambre (140) et le canal de fluide disposé en aval (110), et

un élément élastique (160) qui actionne la soupape mobile (151) avec une force élastique prédéterminée,

la section de restriction (150) comportant un élément de restriction (200) et étant construit intégralement avec la soupape mobile (151),

l'élément de restriction (200) ayant tous ou quelques de la pluralité de trous de restriction (231 à 235) disposés en parallèle dans un même plan,

**caractérisé en ce que**

des parties formant l'élément de restriction (210 à 250), qui ont des trous et/ou des rainures, sont empilées de manière dense de façon que les trous de restriction (231 à 235) communiquent l'un avec l'autre par des canaux formant des chambres de pression (221A à 223A, 241A à 243A) et ayant des zones passantes pour le fluide qui sont plus grandes que les trous de restriction à un haut et sur l'arrière du plan, et de fluide qui s'est écoulé d'un trou d'entrée (211) passe par les trous de restriction (231 à 235) dans une route dans l'ordre et passe en dehors d'un trou de sortie (251) sans fuir.

2. Dispositif selon la revendication 1, le trou d'entrée (211) et le trou de sortie (251) étant prévus l'un en face de l'autre aux deux extrémités des parties formant l'élément de restriction empilées de manière dense (210-250).

3. Dispositif selon l'une des revendications 1 ou 2, les trous de restriction étant formés de façon qu'une longueur des trous de restriction (231 à 235) dans une direction d'écoulement de fluide soit 15 d ou moins par rapport à un diamètre d d'un cercle ayant une même zone qu'une zone passante des trous de restriction

4. Dispositif selon les revendications 1 à 3, les parties de l'élément de restriction (210-250) formant l'élément de restriction (200) étant formées par des articles gravés

5. Dispositif selon l'une quelconque des revendications 1 à 4, les parties de l'élément de restriction (210-250) formant l'élément de restriction (200) étant incorporées par l'adhérence

6. Dispositif selon la revendication 1, les parties (210-250) de l'élément de restriction formant l'élément de restriction (400) étant incorporées par le moulage.

7. Dispositif selon la revendication 6, les parties de l'élément de restriction formant l'élément de restriction (400) étant incorporées par le moulage et étant moulées de deux côtés, un côté extérieur périphérique et un côté intérieure périphérique, des parties formant l'élément de restriction

FIG.1

EP 2 317 189 B1

## FIG.2

TOP SIDE LID MEMBER

1 3 0

2 6 0

2 0 0

1 5 1

1 8 0

1 6 0

BOTTOM SIDE LID MEMBER

1 7 0          1 7 0 A

# FIG.3

FLOW DIRECTION OF FLUID

# FIG.4

EP 2 317 189 B1

# FIG.5

FROM 110, 211

FLOW OF FLUID

222A

233

232

221A

231

242A

223A

235

243A

234

220

230

TO 251, 154    241A    240

EP 2 317 189 B1

# FIG.6

231~235

210

220

230

240

250

1.5d OR LESS

231A~233A

d

241A~243A

EP 2 317 189 B1

# FIG.7

INLET SURFACE

CONTRACTION SURFACE

PIPE LINE

FLOW OF FLUID

d

APPROXIMATELY
0.5d

APPROXIMATELY
1.5d

EP 2 317 189 B1

FIG.8

COMPARISON OF TEMPERATURE ORIGINATED CHANGE IN FLOW RATE

△  PIPE-LIKE RESTRICTING SECTION DESCRIBED IN JAPANESE
    PATENT APPLICATION 2007-069337 (WITHOUT TEMPERATURE
    COMPENSATING MECHANISM) USED

O  RESTRICTING SECTION OF THE INVENTION USED

EP 2 317 189 B1

# FIG.9

## (A)

210

220

230

240

250

## (B)

ELONGATED HOLE FORMED BY 220

ELONGATED HOLE FORMED BY 240

ELONGATED HOLE FORMED BY 220

ELONGATED HOLE FORMED BY 240

ELONGATED HOLE FORMED BY 220

ELONGATED HOLE FORMED BY 240

ELONGATED HOLE FORMED BY 220

ELONGATED HOLE FORMED BY 240

ELONGATED HOLE FORMED BY 220

ELONGATED HOLE FORMED BY 240

ELONGATED HOLE FORMED BY 220

ELONGATED HOLE FORMED BY 240

ELONGATED HOLE FORMED BY 220

ELONGATED HOLE FORMED BY 240

FIG.10

# FIG.11

300

310

310

DIRECTION OF
ATTACHMENT OPERATION

DIRECTION OF
ATTACHMENT OPERATION

180

350

330

360

340

320

151

EP 2 317 189 B1

# FIG.12

EP 2 317 189 B1

FIG.13

# FIG.14

# FIG.15

MOLD DIE FOR 410
(TOP SIDE)

461
251
462
451
452
441
442
431
432
421
211
422

460
450
440
430
420

470

MOLD DIE FOR 410
(BOTTOM SIDE)

# FIG.16

(A)

(B)

(C)

(D)

# FIG.17

410
210
220
230
240
250

# FIG.18

(A)

402
406

230

401

405

408

407

(B)

402

401

405

EP 2 317 189 B1

# FIG.19

(A)

(B)

EP 2 317 189 B1

# FIG.20

(A)

(B)

## FIG.21

(A)

FLOW DIRECTION
OF FLUID

(B)

(C)

# FIG.22

EFFECTIVE PRESSURE RECEIVING AREA OF DIAPHRAGM : $A_D = \pi a_d^2 / 4$

EFFECTIVE CROSS-SECTIONAL AREA OF ORIFICE : $S = \pi s^2 / 4$

EFFECTIVE AREA OF VALVE SEAT : $A_N = \pi a_n^2 / 4$

FIG.23

**EP 2 317 189 B1**

**REFERENCES CITED IN THE DESCRIPTION**

**Patent documents cited in the description**

- US 4210172 A
- EP 0576816 A1
- US 3006378 A
- JP HEI599354 B
- JP 2007069377 A